Europäisches Patentamt

European Patent Office

Office européen des brevets

(11) Publication number: **0 031 101**
**A1**

## (12) EUROPEAN PATENT APPLICATION

(21) Application number: **80107853.6**

(22) Date of filing: **12.12.80**

(51) Int. Cl.³: **B 65 D 81/34**
**B 65 D 65/42, A 47 J 27/00**

(30) Priority: **21.12.79 IT 2837679**

(43) Date of publication of application:
**01.07.81 Bulletin 81/26**

(84) Designated Contracting States:
**AT BE CH DE FR GB LI LU NL SE**

(71) Applicant: **BREMAFIN ESTABLISHMENT**

**Mauren (Vaduz)(LI)**

(72) Inventor: **Locatelli, Adalberto**
**Viale Papiniano, 8**
**I-20100 Milan(IT)**

(74) Representative: **Borella, Ada**
**Ing. A. Racheli & C. Viale San Michele del Carso, 4**
**I-20144 Milan(IT)**

(54) A container provided with antiflame outer lining for contents heating.

(57) This invention relates to a container made with a sheet material formed of several connecting superimposed layers forming a unitary body, of which the inner one (1) is adapted to contact the contents, while the outer one (5) has flameproof properties, that is it is capable of transmitting heat without burning allowing thus the container contents to be heated. An intermediate layer (3) works as a support, while other layers (2,4) are optional and work as connecting elements.

FIG. 3

EP 0 031 101 A1

Applicant:

BREMAFIN ESTABLISHMENT

LIECHTENSTEIN

MAUREN (Vaduz)

"A CONTAINER PROVIDED WITH ANTIFLAME OUTER LINING FOR CONTENTS
HEATING".

This container may be of different shape and size, and in
addition to having the prescribed characteristics for
containing food products, it is externally lined with a
flameproof material capable of transmitting heat, which allows
the setting of the container directly on the fire, thus
avoiding the use of additional conventional pots.

The accompanying drawing shows by mere way of unrestrictive
example some exemplary embodiments on enlarged scale of the
composite material formed of layers almost perfectly contacting

- 2 -

one another. In case, also the provision could be made for an empty hollow space through the use of spacers. Some layers may be made of treated paper in order to have the flameproof characteristics or to meet the requirements of sanitary and hygienical provisions for containers of foodstuffs, food products, medicines and the like. Some layers could be formed of known paints as commercially available, or new marketed patented products.

In the accompanying drawing:

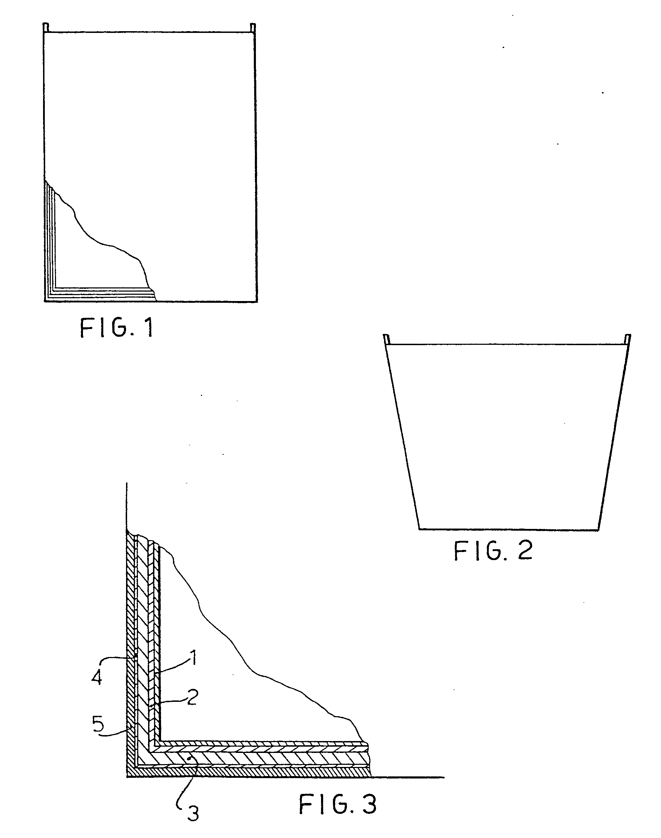

Figs. 1 and 2 show two examples of container, the walls of which have been cut away by a section showing the composition thereof; and

Fig. 3 is a view showing a section portion for the two containers of Figs. 1 and 2.

The composite material used for making this new container is thus obtained, as unrestrictive but demonstrative example, by coupling the elements in the order herein listed: polythene sheet 1 directly contacting the general contained liquid or foodstuff; aluminium sheet 2; inner support 3 made of cardboard for stiffening purpose; connecting element 4 and externally flameproof layer 5, capable of transmitting heat to allow, when desired, to heat the contents or use them when they are warm, whereupon the container may be disposed of.

According to an example of embodiment, the flameproof layer 5 is made by an aluminium layer connected through an adhesive 4 to a support cardboard 3. According to another embodiment the

- 3 -

aluminium layer 5 is directly applied to the support. The
flameproof layer can be made by a paperboard impregnated by any
flameproof substance which is glued or otherwise fixed to
support 3. The flameproof layer 5 can be also made by a simply
highly flameproof paint layer which can be directly applied to
support 3 or through a connecting element 4 working as an
intermediary.

One or more layers which constitute the walls of the container
may be replaced by paints or linings applied during manufacture.

The present invention has the remarkable advantage of operating
as a protective package of the contents and being also effective
for heating thereof at the time of use. This avoids the transferring of the contents into another pot to bring it to the desired
temperature, thus avoiding a conventional step which has the
disadvantage of having to wash out the used auxiliary container.

- 4 -

Applicant:

BREMAFIN ESTABLISHMENT

C L A I M S

1. A container for packing different products, even food products, and allowing the contents heating without transferring it into another container, wherein the container consists of a plurality of superimposed layers, the inner one (1) of which meets the requirements of its contents and another layer (3) works as a support, characterised in that an outer one (5) is provided, which has flameproof properties while allowing the transmission of heat to the inner contents.

2. A container according to Claim 1, characterized in that the outer layer (5) is made by paper treated with flameproof products.

3. A container according to Claim 1, characterized in that the outer layer (5) is made by a paint having flameproof properties.

4.  A container according to Claim 1, characterized in that the outer layer (5) is made by an aluminium layer.

5.  A container according to any of the preceding claims characterized in that the inner layer (1) and the outer layer (5) are connected to the support layer (3) through intermediate connecting elements (2 and 4 respectively).

0031101

1/1

FIG. 1

FIG. 2

FIG. 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | US - A - 3 813 256 (CRYPLEX)<br>-- | 1,3 |
| | US - A - 3 289 722 (USA)<br>-- | 1 |
| | GB - A - 1 336 701 (LEVIN)<br>+ Page 1, lines 56-62 +<br>-- | 1,4 |
| X | US - A - 3 890 448 (TOYO SEIKAN KAISHA)<br>-- | |
| | US - A - 3 619 215 (MAYER & COMPANY, INC.)<br>+ Column 1, lines 30-39; column 3, lines 29-39; claims +<br>-- | 1,4 |
| X | US - A - 3 394 388 (NOTRACO)<br>+ Column 5, lines 31-53 +<br>---- | |

**CLASSIFICATION OF THE APPLICATION (Int. Cl. 3)**

B 65 D 81/34
B 65 D 65/42
A 47 J 27/00

**TECHNICAL FIELDS SEARCHED (Int.Cl. 3)**

A 47 J 27/00
B 65 B 25/00
B 65 D 65/00
B 65 D 81/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search | Date of completion of the search | Examiner |
| VIENNA | 13-02-1981 | MELZER |

EPO Form 1503.1  06.78